# EUROPÄISCHE PATENTSCHRIFT

(11) **EP 3 256 359 B1**
(45) Veröffentlichungstag und Bekanntmachung des Hinweises auf die Patenterteilung: **31.03.2021**
(21) Anmeldenummer: 16705424.6
(22) Anmeldetag: 09.02.2016
(51) Int. Cl.: B61B 13/08, B60L 13/04, E01B 25/30, H01B 12/00

(54) **SCHIENENGEBUNDENE MAGNETSCHWEBEBAHN**
RAIL-BOUND MAGLEV TRAIN
CHEMIN DE FER À SUSTENTATION MAGNÉTIQUE GUIDÉ SUR RAILS

(30) Priorität: 11.02.2015 DE 102015001746
(43) Veröffentlichungstag der Anmeldung: 20.12.2017
(73) Patentinhaber: Karlsruher Institut für Technologie (KIT), 76131 Karlsruhe (DE)
(72) Erfinder: NOE, Mathias, 34270 Schauenburg (DE); HOLZAPFEL, Bernhard, 90542 Eckental (DE)
(86) Internationale Anmeldenummer: PCT/EP2016/000215
(87) Internationale Veröffentlichungsnummer: WO 2016/128130

(56) Entgegenhaltungen:
- CN-Y- 201 030 803
- DE-A1- 4 204 732
- DE-A1- 10 357 264
- JP-A- H0 226 204
- JP-A- H11 107 201
- JP-A- S63 287 305
- US-A- 3 662 689
- US-A- 5 249 529

## Beschreibung

Die Erfindung betrifft eine schienengebundene Magnetschwebebahn gemäß des ersten Patentanspruchs.

Magnetschwebebahnsysteme zählen zu den Transportsystemen, die sich durch einen körperkontaktfreien Betrieb eines Fahrzeugs auf einem das Fahrzeug in mindestens einer Richtung führenden Trägersystem auszeichnen. Für den geführten kontaktfreien Betrieb müssen Trägersystem und Fahrzeug physikalisch in Wechselwirkung stehen. Bekannte System nutzen hierzu beispielsweise ein Luftkissen oder magnetische Kräfte, die der Gewichtskraft oder andere Kräfte, die durch das Fahrzeugs oder andere Kraftquellen einwirken, in Gleichgewicht stehen. Bei Magnetschwebebahnsystemen kommen als Trägersyteme vorzugsweise Schienen zum Einsatz, die die Beweglichkeit des Fahrzeugs in zwei von drei Raumrichtungen vorgeben. Damit ist eine Bewegung des Fahrzeugs nur noch in die ungeführt verbleibende horizontale Ausrichtung der Schiene möglich.

Magnetschwebebahnsysteme kommen im Schwebezustand ohne eine. Festkörperreibung oder Flüssigreibung z.B. auf einer Lauffläche aus und ermöglichen somit einen für hohe Transportgeschwindigkeiten besonders geeigneten reibungsarmen Betrieb. Der Antrieb für den Vortrieb des Fahrzeugs erfolgt vorzugweise mittels ebenfalls körperkontaktfreie elektromagnetischen Linearmotoren entweder im Fahrzeug oder im Trägersystem oder auch mittels fahrzeugseitigen Strömungsmaschinen.

Magnetisch wirkende Schwebebahnkonzpete sind schon länger bekannt. Man unterscheidet zwischen elektrodynamischen, elektromagnetischen sowie permanentmagnetischen Schwebebahnsystemen.

Bereits 1911 wurde in der GB 1911 9573 ein erstes **elektrodynamisches Schwebetransportsystem** beschrieben, wobei ein Fahrzeug auf einer Trasse aus Aluminium mittels periodischer oder unterbrochener Magnetfelder mit abstoßenden Kräfte in Schwebe gehalten wird. Es werden sowohl horizontal als auch vertikal wirkende Magnetfelder beschrieben, wobei der Vortrieb mit einem Propeller erfolgt. In der elektrisch leitenden, aber nicht magnetischen Trasse entstehen dabei Wirbelströme. Für die Einstellung der vorgenannten abstoßenden Kräfte und damit eines Schwebezustands sind wechselnde Magnetfelder, hervorgerufen durch die Fahrzeuggeschwindigkeit zwingend erforderlich.

Ein **elektromagnetisches Magnetschwebebahnkonzept** wurde 1937 in der DE 643 316 ein beschrieben. In diesem wird ein Fahrzeug mittels mit Elektromagneten erzeugter Felder schwebend auf eisernen, d.h. auf ferromagnetischen Fahrschienen geführt. Die Elektromagnete sind zwischen den Schienen und an den Fahrzeugen verteilt angeordnet. Wesentlich hierbei war die Regelung der magnetischen Felder mit Hilfe von Abstandssteuersystemen, wobei der Abstand zwischen Fahrschiene und Fahrzeug induktiv oder kapazitiv ermittelt wurde.

In der DE 39 27 453 C2 wird beispielhaft ein **permanentmagnetisches Konzept** beschrieben, bei dem passive Permanentmagnete und Weicheisen-Polelemente zum Einsatz kommen.

Magnetschwebebahnsysteme eignen sich somit besonders für die Realisierung von Hochgeschwindigkeitsbahnen insbesondere für den Personentransport. Entsprechende Systeme sind bereit in der Testphase und beruhen auf den folgend angeführten Konzepten.

DE 30 04 704 C2 offenbart ein elektromagnetisches Schwebeprinzip, wie es z.B. beim System Transrapid eingesetzt wurde. Die Schienen werden durch eine Trasse mit lamelliertem Eisenkern gebildet, die magnetisch mit fahrzeugseitigen horizontal und vertikal wirkende Magnetquellen, vorzugsweise Elektromagnete in Wechselwirkung steht. Zwischen Trasse und Magnetquellen wirken Anziehungskräfte, die der Gewichtskraft und den seitlich wirkenden Führungskräften des Fahrzeugs in Gleichgewicht entgegenwirken. Um das Fahrzeug durch Anziehungskräfte anzuheben, sind ein Teil Magnetquellen unter der Trasse angeordnet, d.h. die Träger dieser umgreifen die Trassenränder. Eine Spaltregelung zur Einhaltung der Spaltbreite zwischen Fahrzeug und Schiene greift aktiv in die Ansteuerung der Magnetquellen ein.

Aktuelle Konzepte eines Magnetschwebebahnsystems nutzen supraleitende Magnete, die mit elektrisch leitfähigen Spulen in magnetischer Wechselwirkung stehen und eine gegenüber diesen wirkende magnetische Kraft erzeugen. Wird ein Supraleiter in einem äußeren inhomogenen Magnetfeld unter seine supraleitende Sprungtemperatur Tc abgekühlt, wird die Form dieses äußeren Magnetfeldes in der jeweiligen Position im Supraleiter eingefroren. Die genannte Kraft ist je nach Ausrichtung der Magnete überwiegend als Hubkraft senkrecht zur Schiene oder als Vortriebskraft parallel zur Schiene ausgerichtet.

In DE 19 52 757 A wurde eine supraleitende Aufhängung für eine elektrodynamisches Schwebetransportsystem beschrieben. Die diamagnetischen Eigenschaften von Supraleitern des Typs I wie Blei ermöglichen den Aufbau von Oberflächenströmen, die ein magnetisches Feld erzeugen, das einem von außen einwirkenden Feld entgegenwirkt.
Ebenso ist aus der DE 42 04 732 A1 beispielhaft eine Magnetschwebebahn bekannt, bei dem mehrere seriell angeordnete fahrzeugseitige supraleitende Magnete gegen trassenseitige Tragspulen wirken. Dieser Ansatz wird auch im aktuellen Maglev-System verfolgt, ein japanisches Magnetschwebebahnprojekt zwischen Tokyo und Osaka, Japan, bei dem ein Linearmotor auf die Spulen zur Übertragung von Antriebs- und Bremskraft auf die Trasse zurückgreift.

Eine grundsätzliche Herausforderung bei einem Einsatz von Supraleitern ist die Herstellung der erforderlichen Kühlung unterhalb der Sprungtemperatur T_{c}. Erst in den letzten Jahren wurden Supraleitermaterialien mit T_{c} oberhalb der Siedetemperatur von Stickstoff erschlossen, was eine technologische Umsetzung erheblich vereinfacht, wenn nicht überhaupt ermöglicht.

Durch eine Kombination eines Magneten mit einem Supraleiter mit hoher Sprungtemperatur T_{c} können ein magnetisches Schweben und eine Bewegung verwirklicht werden, wobei der Diamagnetismus des Supraleiters nutzbar ist.

In der DE 102 18 439 A1 wird beispielhaft eine Magnetanordnungskonzept für die Aufhängung und Führung schwebender Fahrzeuge beschrieben, bei eine Anordnung an einer Magnetteileanordnung und einer körperlich mit dieser verbundenen Supraleiteranordnung aus einen oder mehreren Supraleitern (vorzugsweise schmelztexturiertem YBaCuO-Material) einer Anordnung von drei Magnetschienen gegenüberstehen. Es werden Ausführungen mit einer trassenseitigen oder einer fahrzeugseitigen Supraleiteranordnung offenbart. Die supraleitenden Komponenten sind in bestimmten Ausführungen mit wärmedämmenden Material und/oder einer Schutzschicht gegenüber Oxidation und/oder Feuchtigkeitseinwirkung versehen.

JP S63 287305A offenbart ein Schwebetransportsystem, das aus einem durch magnetische Levitation schwebenden Fahrzeug und einer Führungsschiene besteht. Die Führungsschiene ist aus einzelnen, hintereinander angeordneten blockförmigen Supraleitern ausgestaltet. An der Unterseite des Fahrzeugs sind magnetische Mittel angebracht. Sie bestehen entweder aus Permanentmagneten oder Spulen, die über elektrische Anschlüsse mit Strom versorgt werden, um ein Magnetfeld zu erzeugen, dass für die abstoßende Kraft zwischen Führungsschiene und Fahrzeug sorgt.

In US 3 662 689 A wird ein Hochgeschwindigkeitszug beschrieben, der über einer supraleitenden Führungsschiene geleitet wird. Der Hochgeschwindigkeitszug weist supraleitende Magnete auf, die das Magnetfeld erzeugen, das für die abstoßende Kraft zwisehen Führungsschiene und Fahrzeug sorgt, die den Hochgeschwindigkeitszug über der Führungsschiene anhebt.

In allen bekannten Konzepten unter Verwendung von Supraleiterelementen werden diese für die Sicherstellung einer magnetischen oder elektrodynamischen Wechselwirkung genutzt.

Davon ausgehend liegt die **Aufgabe der Erfindung** darin, eine schienengebundene Magnetschwebebahn vorzuschlagen, bei der sich die Trasse auch für den Transport von Energie besonders gut eignet.

Die Aufgabe wird mit einer schienengebundenen Magnetschwebebahn mit den Merkmalen des Anspruch 1 gelöst. Auf diesen rückbezogene Unteransprüche geben vorteilhafte Ausgestaltungen wieder.

Zur Lösung der Aufgabe wird ein schienengebundenes Magnetschwebebahnsystem, wobei die Trasse vorzugsweise durch eine Führungsschiene mit einem supraleitenden Element ausgebildet ist. Die Führungsschiene gibt einen Fahrweg für ein auf dieser schwebendes Fahrzeug vor. Hierzu weist das Fahrzeug magnetische Mittel auf, die mit dem Fahrweg kontaktlos in magnetischer Wechselwirkung stehen. Das trassenseitige supraleitende Element dient damit der Erzeugung und Fixierung eines magnetischen Feldes in bekannter vorgenannter Weise und bildet damit zumindest teilweise den magnetischen Gegenpol zu den fahrzeugseitigen magnetischen Mitteln.

Die fahrzeugseitigen Mittel umfassen in einer Ausgestaltung vorzugsweise ein oder mehrere supraleitende Elemente. Eine alternative Ausgestaltung dieser magnetischen Mittel umfassen in Richtung des Fahrwegs in Reihe angeordnete Magnete mit abwechselnd gegenläufiger Polungsrichtung in Richtung zum magnetisch korrespondierenden Mittel in der Trasse oder Fahrschiene. In beiden Fällen stehen die Mittel mit den trassenseitig erzeugten Magnetfeldern oder Mitteln in Wechselwirkung und erzeugen gegenüber diesen magnetische Kräfte.

Ein wesentliches Merkmal umfasst das das mindestens eine supraleitende Element, das durch mindestens einen supraleitenden Leiter, weiter vorzugsweise entlang, d.h. parallel zum Fahrweg gebildet ist. Weiterhin ist der mindestens eine supraleitende Leiter oder zumindest ein Teil dieses als eine durchgehende supraleitende elektrische Leitung gestaltet und wird als solche verwendet. Folglich weist der mindestens eine supraleitende Leiter mindestens zwei elektrische Anschlüsse pro Leiter auf. Vorzugsweise sind diese jeweils beiden Enden des Leiters angeordnet.

Das supraleitende Element (Leiter) wird folglich nicht nur zur Erzeugung und Fixierung eines magnetischen Feldes genutzt, sondern auch als supraleitende elektrische Leitung zum verlustfreien oder verlustarmen Transport elektrischer Energie in der Trasse entlang des Fahrweges.

Die Anschlüsse werden bevorzugt durch niederohmige Normalleiter-Supraleiter Kontakte, vorzugsweise Presskontakte oder auch lotbasierte Verbindungen gebildet.

Eine Ausgestaltung sieht vor, mehrere supraleitende Leiter hintereinander, d.h. in Reihe zu einer Leitung zu verschalten. Vorzugsweise werden die Enden der hintereinander in der Trasse oder Führungsschiene angeordneten Leiter elektrisch miteinander verbunden und bilden so die elektrischen Anschlüsse der jeweils anschließenden Leiter.

Eine besondere Herausforderung liegt darin, in der Trasse über die gesamte Erstreckung der Leitung eine Temperatur unterhalb T_{c} sicherzustellen. Dies wird vorzugsweise dadurch.realisiert, indem die gesamte Fahrstrecke mit dem supraleitenden Elementen sich in einem Kryostaten befinden, der in seinem Inneren auf die gewünschte Betriebstemperatur T < T_{c} abgekühlt wird. Die Kühlung erfolgt dabei vorzugsweise in einem geschlossenen Kühlkreislauf.

Eine Ausgestaltung sieht vor, parallel in der Führungsschiene verlaufende supraleitende Leiter parallel zu verschalten, d.h. sie an mindestens zwei Stellen elektrisch miteinander zu verbinden. Durch die damit geschaffenen redundanten Leitungsverbindungen durch die parallel geschalteten Leiter werden in vorteilhafter Weise lokale Störungen in den supraleitenden Eigenschaften eines Leiters durch jeweils benachbarte Bänder überbrückbar.

Ein supraleitender Leiter der vorgenannten Art ist oder umfasst vorzugsweise ein Band, alternativ einen ebenfalls bevorzugten Draht.

Eine Ausgestaltung der schienengebundenen Magnetschwebebahn sieht Unstetigkeitsstellen, vorzugsweise in der elektrischen Leitfähigkeit und/oder der Geometrie im supraleitenden Element in Richtung des Fahrwegs vor. Weiter bevorzugt sind die Unstetigkeitsstellen an der Oberfläche des supraleitenden Elements angeordnet, im Rahmen von Ausgestaltungen als Vertiefung oder Aufsatz im bzw. auf dem supraleitenden Element.

Die Unstetigkeitsstellen sind durch im Fahrzeug angeordnete Mittel erfassbar. Diese umfassen bevorzugt optische oder magnetische Sensoren, die beim Befahren des Fahrwegs die Unstetigkeitsstellen erkennen und ein Signal auslösen. In einer weiter bevorzugten Ausgestaltung werden diese Mittel zur Erfassung der Unstetigkeiten durch die vorgenannten mit dem Fahrweg kontaktlos in magnetischer Wechselwirkung stehenden magnetischen Mittel des Fahrzeugs gebildet. Das ausgelöste Signal dient bevorzugt der Triggerung eines Ereignisses, beispielsweise einer Bremsung. Alternativ dient die Unstetigkeit als Zielmarke bei einer Positionierung des Fahrzeugs bei einem Verfahrvorgang.

Eine Ausgestaltung der schienengebundenen Magnetschwebebahn sieht daher vor, mehrere supraleitende Leiter wie Bänder oder Drähte hintereinander d.h. in Reihe anzuordnen und vorzugsweise durch weichmagnetische Flussführungsstücke elektrisch zu verbinden. Damit werden im Leiter Unstetigkeitsstellen im homogenen Stromdurchfluss generiert, die in einem durchgängigen Band oder Draht nicht auftreten und für einen vorteilhaft homogenen Stromdurchfluss mit vorteilhaft geringen Verlusten sorgen würden. Die Unstetigkeitsstellen mit weichmagnetischen Flussführungsstücken erzeugen jedoch lokale inhomogene Magnetfelder an der Oberfläche der Trasse, die in vorteilhaft in vorgenannter Weise nutzbar sind.

Die Erfindung umfasst weiterhin eine Verwendung der schienengebundenen Magnetschwebebahn als Transportmittel für Personen und Güter.

Eine bevorzugte Ausführung sieht eine Verwendung als Linearpositionierung z.B. für Transportaufgaben und Positionierungen in einem Produktionsprozess vor. Markierungen im supraleitenden Leiter

Die schienengebundene Magnetschwebebahn sowie Ausgestaltungen dieses werden anhand von Ausführungsbeispielen mit den folgenden Figuren erläutert. Es zeigen
**Fig.1** eine schematische Darstellung einer ersten Ausführung mit einem trassenseitigen Schichtverbund aus mindestens einem supraleitenden Band als Leiter und mindestens einem Band aus einem weichmagnetischen Material wie Eisen parallel zum Fahrweg sowie
**Fig.2** eine schematische Darstellung einer weiteren bevorzugten Ausführung mit trassenseitigen supraleitendem Band oder einen Schichtstapel aus supraleitenden Bändern.

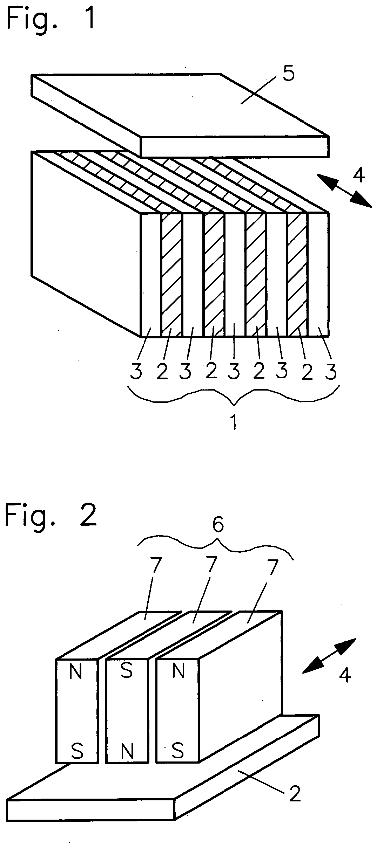

Die in **Fig.1** dargestellte bevorzugte Ausführung der schienengebundenen Magnetschwebebahn sieht einen trassenseitigen Schichtverbund **1** aus mindestens einem supraleitenden Band **2** und mindestens einem Band aus einem weichmagnetischen Material **3** parallel zum Fahrweg (Fahrtrichtung **4**) vor. Eisenbänder und supraleitende Bänder sind vorzugsweise parallel und weiter vorzugsweise in abwechselnder Reihenfolge zueinander zu dem genannten Schichtverbund gestapelt. Bänder aus einem weichmagnetischen Material und supraleitende Bänder weisen zudem bevorzugt eine einheitliche Breite und Länge auf, was dem Schichtverbund einen bevorzugt rechteckigen Querschnitt und damit auch eine Vorzugsrichtung für das magnetische Feld vorgibt. Der Schichtverbund ist zudem in der Trasse eingebunden oder bildet selbst die Trasse oder Schiene der schienengebundenen Magnetschwebebahn. In dieser sind die Bänder im Schichtverbund zur Erzielung einer maximalen Magnetfeldwirkung (Vorzugsrichtung) vorzugsweise orthogonal zu den magnetischen Mitteln des auf der Trasse aufgesetzten Fahrzeugs ausgerichtet. Diese magnetischen Mittel werden bei dieser Ausführung vorzugsweise durch eine (vgl. **Fig.1**) oder mehrere fahrzeugseitigen supraleitende Elemente **5** gebildet.

Die Bänder aus einem weichmagnetischen Material **3** umfassen zumindest teilweise vorzugsweise Eisenbänder oder Bänder aus einer oder mehreren weichmagnetischen Legierung oder bestehen aus den genannten Bändern. Wesentlich ist dabei, dass das weichmagnetische Material das vom (stromdurchflossenen) Supraleiter erzeugte Magnetfeld verstärkt und so an die Oberfläche der Fahrstrecke führt, womit sich der magnetische Flussdichtegradient in vorteilhafter Weise erhöht.

**Fig.1** repräsentiert beispielhaft ein elektrodynamisches Schwebebahnkonzept.

Eine weitere bevorzugte beispielhafte Ausführung der schienengebundenen Magnetschwebebahn ist in **Fig.2** schematisch dargestellt. Dieses sieht in der Trasse oder Schiene supraleitendes Band **2** (wie dargestellt) oder einen Schichtstapel aus supraleitenden Bändern vor, wobei mindestens eines dieser Bänder parallel zum Fahrweg **4** des Fahrzeugs und vorzugswiese auch zu den magnetischen Mitteln **6** in einem überfahrenden Fahrzeugs ausgerichtet ist. Diese fahrzeugseitigen magnetischen Mittel werden bei dieser Ausführung vorzugsweise durch in Richtung des Fahrwegs in Reihe angeordnete Magnete **7** mit abwechselnd gegenläufiger Polungsrichtung (dargestellt in der Polungsrichtung Nord - Süd bzw. N-S) in Richtung zum supraleitenden Band gebildet.

**Fig.2** repräsentiert beispielhaft und je nach Ausgestaltung der Magnete **7** als Elektromagnete oder als Permanentmagnete ein elektromagnetisches bzw. permanentmagnetische Magnetschwebebahnkonzept.

Ein eingangs genannte supraleitender Leiter, in **Fig.1 und 2** beispielhaft als supraleitendes Band **2** dargestellt, ist oder umfasst vorzugsweise ein Band, alternativ einen ebenfalls bevorzugten Draht. Bänder und Drähte unterscheiden sich bei einem Stromdurchfluss in der Ausbildung der umliegenden elektrischen und damit magnetischen Felder. In der in **Fig.1** dargestellten Ausführungsform eignen sich Drähte und Bänder gleichermaßen. Für die Ausführung nach **Fig.2** muss die Fahrstrecke aber aus einem Stapel aus Bändern bestehen. Nur durch diese können entsprechende (zum Fahrzeug passende) Magnetfeldkonfigurationen in der Fahrstrecke eingeprägt werden.

### Bezugszeichenliste:

- 1: Schichtverbund
- 2: supraleitendes Band
- 3: Band aus einem weichmagnetischen Material
- 4: Fahrtrichtung
- 5: supraleitendes Element
- 6: magnetische Mittel
- 7: Magnet

## Patentansprüche

1. Schienengebundene Magnetschwebebahn, umfassend
a) eine Führungsschiene, die einen Fahrweg vorgibt, mit mindestens einem supraleitenden Element **(2)** sowie
b) ein auf der Führungsschiene angeordnetes schwebendes Fahrzeug mit magnetischen Mitteln **(6),** wobei die magnetischen Mittel mit dem Fahrweg kontaktlos in magnetischer Wechselwirkung stehen,
wobei
c) das mindestens eine supraleitende Element mindestens einen supraleitenden Leiter **(2)** parallel zum Fahrweg **(4)** umfasst
**dadurch gekennzeichnet, dass**
d) der mindestens eine supraleitende Leiter als eine durchgehende supraleitende elektrische Leitung gestaltet ist,
wobei der mindestens eine supraleitende Leiter ein supraleitendes Band ist,
wobei der mindestens eine supraleitende Leiter mindestens zwei elektrische Anschlüsse aufweist, wobei die jeweils mindestens zwei Anschlüsse einen zwischen diesen angeordneten Bandabschnitt als durchgehende supraleitende elektrische Leitung begrenzen,
und wobei die jeweils mindestens zwei Anschlüsse an dem mindestens einen supraleitenden Leiter an den beiden Leiterenden positioniert sind.

2. Schienengebundene Magnetschwebebahn nach Anspruch 1, **dadurch gekennzeichnet, dass** das supraleitende Element durch eine Verbindung hintereinander geschalteter supraleitender Bänder gebildet wird..

3. Schienengebundene Magnetschwebebahn nach einem der Ansprüche 1 bis 2, **dadurch gekennzeichnet, dass**
a) der mindestens eine supraleitende Leiter mit mindestens einem Eisenleiter in abwechselnder Reihenfolge gestapelt einen Schichtverbund bilden,
b) die magnetischen Mittel durch ein fahrzeugseitiges supraleitendes Element gebildet werden.

4. Schienengebundene Magnetschwebebahn nach Anspruch 3, **dadurch gekennzeichnet, dass** die Leiter parallel zum Fahrweg und orthogonal zu den magnetischen Mitteln ausgerichtet sind.

5. Schienengebundene Magnetschwebebahn nach Anspruch 1, **dadurch gekennzeichnet, dass**
a) der mindestens eine supraleitende Leiter parallel zu den magnetischen Mitteln ausgerichtet ist und einen Schichtstapel bilden und
b) die magnetischen Mittel in Richtung des Fahrwegs in Reihe angeordnete Magnete mit abwechselnd gegenläufiger Polungsrichtung in Richtung zum supraleitenden Band umfassen.

6. Schienengebundene Magnetschwebebahn nach einem der vorgenannten Ansprüche, **dadurch gekennzeichnet, dass** das supraleitende Element in Richtung des Fahrwegs Unstetigkeiten in den geometrischen und/oder elektrischen Eigenschaften aufweist.

7. Schienengebundene Magnetschwebebahn nach Anspruch 6, **dadurch gekennzeichnet, dass** das Fahrzeug Mittel zur Erfassung der Unstetigkeiten aufweist.

8. Schienengebundene Magnetschwebebahn nach Anspruch 6 oder 7, **dadurch gekennzeichnet, dass** die Mittel zur Erfassung der Unstetigkeiten durch die magnetischen Mittel des Fahrzeugs gebildet werden.

## Claims

1. Rail-bound maglev train, comprising
a) a guide rail, which gives onto a guideway track, with at least one superconducting element (2) and
b) a maglev vehicle arranged on the guide rail with magnetic means (6), wherein the magnetic means are in contactless magnetic reciprocal effect with the guideway track,
wherein
c) the at least one superconducting element comprises at least one superconducting conductor (2) parallel to the guideway track (4), **characterised in that**
d) the at least one superconducting conductor is configured as a continuous superconducting electrical conducting element,
wherein the at least one superconducting conductor is a superconducting band,
wherein the at least one superconducting conductor comprises at least two electrical connections which delimit a band section arranged between them as a continuous superconducting electrical conductor,
and wherein the at least two connections in each case are positioned at the at least one superconducting conductor at the two conductor ends.

2. Rail-bound maglev train according to claim 1, **characterised in that** the superconducting element is formed by a combination of superconducting bands connected in a circuit one behind another.

3. Rail-bound maglev train according to any one of claims 1 to 2, **characterised in that**
a) the at least one superconducting conductor, stacked with at least one iron conductor in an alternating sequence, forms a layer composite,
b) the magnetic means are formed by a superconductive element on the vehicle side.

4. Rail-bound maglev train according to claim 3, **characterised in that** the conductors are aligned parallel to the track and orthogonally to the magnetic means.

5. Rail-bound maglev train according to claim 1, **characterised in that**
a) the at least one superconducting conductor is aligned parallel to the magnetic means and form a layer stack, and
b) the magnetic means comprise magnets arranged in series in the direction of the track, with alternating opposed polarisation directions, in the direction towards the superconducting band.

6. Rail-bound maglev train according to any one of the preceding claims, **characterised in that** the superconducting element exhibits discontinuities in the direction of the track in its geometric and/or electrical properties.

7. Rail-bound maglev train according to claim 6, **characterised in that** the vehicle comprises means for the detection of discontinuities.

8. Rail-bound maglev train according to claim 6 or 7, **characterised in that** the means for detecting the discontinuities are formed by the magnetic means of the vehicle.

## Revendications

1. Chemin de fer à sustentation magnétique guidé sur rail, comprenant :
a) un rail de guidage qui prédéfinit un chemin de circulation comportant au moins un élément supraconducteur (2) ainsi que,
b) un véhicule en sustentation sur le rail de guidage comportant des moyens magnétiques (6), ces moyens magnétiques coopérant sans contact par action magnétique avec le chemin de circulation dans lequel,
c) au moins cet élément supraconducteur comprend au moins un conducteur supraconducteur (2) parallèle au chemin de circulation (4),
**caractérisé en ce que**
d) au moins ce supraconducteur est réalisé sous la forme d'une ligne électrique supraconductrice, continue,
- au moins ce supraconducteur est une bande supraconductrice,
- au moins ce supraconducteur comporte au moins deux branchements électriques, au moins ces branchements électriques délimitant entre eux ce segment de bande comme ligne électrique supraconductrice continue, et
- au moins les deux branchements sont positionnés sur au moins ce supraconducteur aux deux extrémités du conducteur.

2. Chemin de fer à sustentation magnétique guidé par rail selon la revendication 1,
**caractérisé en ce que**
l'élément supraconducteur est formé par la réunion de bandes supraconductrices, les unes derrière les autres.

3. Chemin de fer à sustentation magnétique guidé par rail selon l'une des revendications 1 à 2,
**caractérisé en ce que**
a) au moins ce supraconducteur forme une combinaison en couches avec au moins un conducteur en fer, selon un empilage en ordre alterné,
b) les moyens magnétiques sont formés par un élément supraconducteur côté véhicule.

4. Chemin de fer à sustentation magnétique guidé par rail selon la revendication 3,
**caractérisé en ce que**
les conducteurs sont orientés parallèlement au chemin de circulation et perpendiculairement aux moyens magnétiques.

5. Chemin de fer à sustentation magnétique guidé par rail selon la revendication 1,
**caractérisé en ce que**
a) au moins ce supraconducteur est orienté parallèlement aux moyens magnétiques et forme un empilage en couches, et
b) les moyens magnétiques sont composés, dans la direction du chemin de circulation, par des aimants en rangées avec une direction polaire opposée en alternance dans la direction de la bande supraconductrice.

6. Chemin de fer à sustentation magnétique guidé par rail selon l'une des revendications précédentes,
**caractérisé en ce que**
dans la direction du chemin de circulation, l'élément supraconducteur comporte des discontinuités des propriétés géométriques et/ou électriques.

7. Chemin de fer à sustentation magnétique guidé par rail selon la revendication 6,
**caractérisé en ce que**
le véhicule comporte des moyens pour saisir les discontinuités.

8. Chemin de fer à sustentation magnétique guidé par rail selon la revendication 6 ou 7,
**caractérisé en ce que**
les moyens pour saisir des discontinuités sont formés par les moyens magnétiques du véhicule.
